# EUROPEAN PATENT APPLICATION

(11) **EP 4 276 633 A1**
(43) Date of publication of application: **15.11.2023**
(21) Application number: 22305710.0
(22) Date of filing: 13.05.2022
(51) Int. Cl.: G06F 12/02, G06F 12/0804, G06F 12/0888, G06F 12/0897, G06F 12/14, G06F 9/30, G06F 21/71, G06F 13/40

(54) **SECURED SEMICONDUCTOR DEVICE AND METHOD**

(71) Applicant: Thales Dis France SAS, 92190 Meudon (FR)
(72) Inventor: TEGLIA, Yannick, 92190 Meudon (FR); MARTINOLI, Valentin, 92190 Meudon (FR)
(74) Representative: Bricks, Amélie

(57) **Abstract**

The invention relates to a secured semiconductor device and method for securing such a device, the device comprising an additional secured bus for transfer of data from/to the central processing unit to/from a primary memory or a dedicated additional memory, the additional secured bus bypassing the micro-architectural load port and/or the micro-architectural line fill buffer, and/or the cache memory, and the instructions set of the central processing unit further implements two operations for a secured transfer, a first operation allowing to securely load data in the central processing unit from the primary memory through the additional secured bus, and a second operation allowing to securely store data from the central processing unit in the primary memory through the additional secured bus.

## Description

### FIELD OF THE INVENTION

The invention relates to a secured semiconductor device comprising a central processing unit (CPU), a micro-architectural store buffer and/or a micro-architectural load port and/or a micro-architectural line fill buffer, and/or a cache memory, a primary memory, a cache bus allowing transfer of data at least from/to the central processing unit to/from the cache memory, a regular data bus allowing transfer of data at least from/to the central processing unit to/from the primary memory and a regular address bus allowing transfer of addresses from/to the central processing unit to/from the primary memory, wherein the central processing unit is provided with an instruction set, the instruction set comprising a regular first instruction operation code allowing to load data in the central processing unit from the primary memory through the system data bus, and a regular second instruction operation code allowing to store data from the central processing unit in the primary memory. It also relates to a method for securing a semiconductor device.

### BACKGROUND OF THE INVENTION

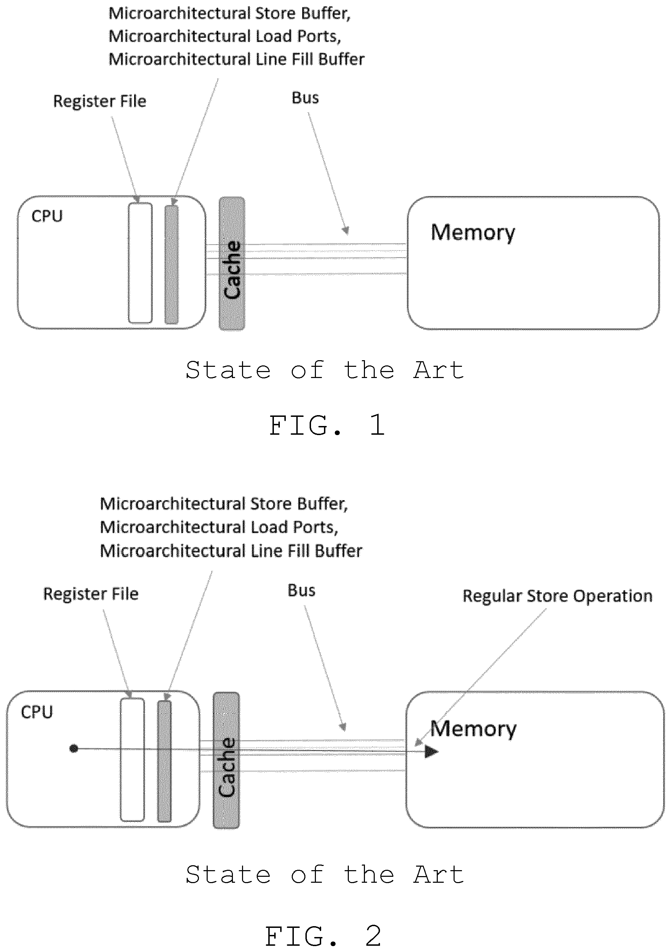

Modern central processing units (CPUs), micro-controllers (MCU) and, more generally, system on Chip (SoC) are running at high frequencies. Primary memories, that are external to the CPUs, for example, Random Access Memories (RAMs), more particularly, Dynamic Random Access Memories (DRAMs), cannot sustain such a high throughput. They cannot always be accessed that fast. This is the reason why cache memories are often necessary to implement. As shown in Fig. 1, cache memories are fast access memories, which are used as buffers between a CPU and the primary memories and that mirrors part of them, keeping values depending on the cache policies such as the Least Recently Used or First In First Out implementation policies. The very purpose of implementing cache memories is that, when a data is accessed, the time for the CPU to recover it, is way shorter if the data is in the cache than if the data is not. The Micro architectural resources have been established as buffers to increase the computational efficiency and save time. These are, in particular, memory caches L1, L2 and L3, store buffers and load ports. Upon a load operation, the caches and internal buffers are triggered so that all the time savings mechanisms can be actioned to check the presence of a copy of the requested memory location in a near buffer or cache. As shown in Fig. 2, upon a store operation, those buffers and caches are modified to keep track of the writing of the value in the expected memory location. This footprint will remain until eviction by the system according to a given policy. To do so, those resources keep the information, so that accessing them is faster than accessing the memory.

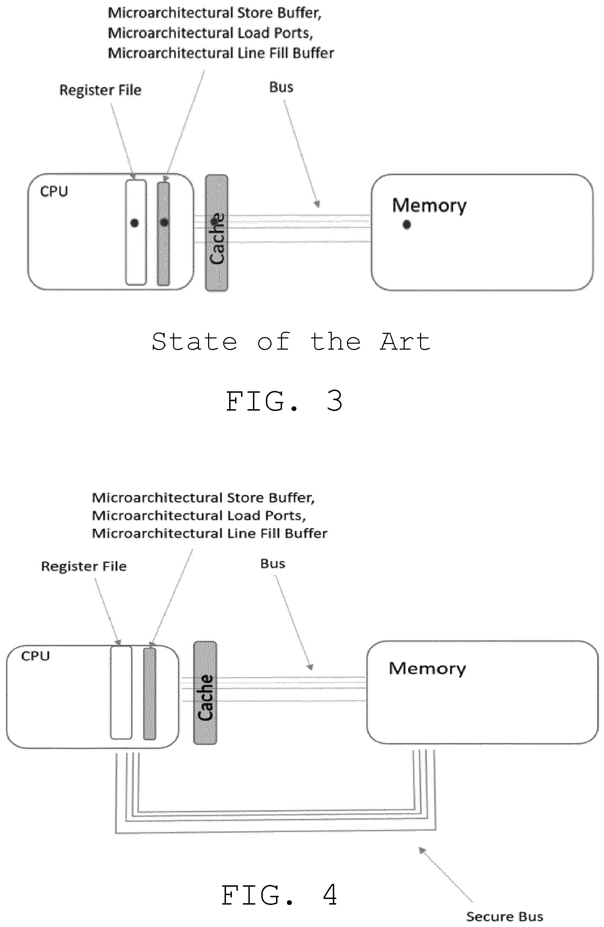

The counterpart of this is that the information may leak in those different entities, i.e. in the Register File, the Micro-architectural Store Buffer (SB)/Micro-architectural Load Ports (LPs)/Micro-architectural Line Fill Buffer (LFB), the cache memory and, of course, the memory itself. The locations where the information may leak are shown in Fig. 3.

When a data is fetched, the time for its actual recovery varies, depending on its presence or not in the above buffers. The data leaks upon "misses" or not when accessing those different structures.

Some attacks are exploiting the timing differences between presence/absence of secret data going through the cache by forcing evictions in some clever way. This was first reported in Dag Arne Osvik, Adi Shamir, Eran Tromer: Cache Attacks and Countermeasures: The Case of AES. CT-RSA 2006: 1-20, and then extended widely in Yuval Yarom, Katrina Falkner: FLUSH+RELOAD: A High Resolution, Low Noise, L3 Cache Side-Channel Attack. USENIX Security Symposium 2014: 719-732. Also, microarchitectural attacks are often described as software-based side-channel attacks. This category of attacks exploits the presence of performance optimizations inside the processors and the memory hierarchy. These optimizations, during their normal behaviour, allow to handle secret information, and the computations are leaving some traces that cannot be removed. The leakages remain at the microarchitectural level and can be recovered using a microarchitectural attack. The most common example of exploited resources are the caches, but any shared resource at the micro architectural level can be used to recover secrets using these attacks. Most of the attacks use a covert-channel as the final step to recover the information from the microarchitectural level to the architectural level, where it can be observed. One example of covert-channel is the above-mentioned FLUSH+RELOAD technique.

Leakage of information is a recurrent issue in modern high-end CPUs, like Intel^{™} Core iXX, ARM^{™} Axx or AMD^{™} Ryzen CPUs. Some existing CPUs have to deal with software (SW) mitigations only. This is the case, for example, of Intel^{™} Core iXX CPUs.

Of course, an obvious way of preventing the above threats would be to simply remove all caches and other speed-up mechanisms. However, this cannot be considered as a long-term solution, as it would jeopardize the efficiency of the architecture of the MCUs and SoCs. Another idea would be to flush the caches and other structures in a random way, but again this will add strong penalties to the whole system. More selective flush could also be done on selected cache lines for instance, but this boils down on how to apply the selection.

### SUMMARY OF THE INVENTION

Accordingly, a need still exists for securing the implementations against those micro-architectural attacks, for example, in the context of home-made CPUs or open CPUs, for instance the RISC-V implementing CPUs.

In accordance with a first aspect, the invention concerns a secured semiconductor device comprising a central processing unit (CPU), a micro-architectural store buffer and/or a micro-architectural load port and/or a micro-architectural line fill buffer, and/or a cache memory, a primary memory, a cache bus allowing transfer of data at least from/to the central processing unit to/from the cache memory, a regular data bus allowing transfer of data at least from/to the central processing unit to/from the primary memory and a regular address bus allowing transfer of addresses from/to the central processing unit to/from the primary memory, wherein the central processing unit is provided with an instruction set, the instruction set comprising a regular first instruction operation code allowing to load data in the central processing unit from the primary memory through the system data bus, and a regular second instruction operation code allowing to store data from the central processing unit in the primary memory, characterized in that the device further comprises an additional secured bus for transfer of data from/to the central processing unit to/from the primary memory or a dedicated additional memory, the additional secured bus bypassing the micro-architectural load port and/or the micro-architectural line fill buffer, and/or the cache memory, and the instructions set of the central processing unit further implements two operations for a secured transfer, a first operation allowing to securely load data in the central processing unit from the primary memory through the additional secured bus, and a second operation allowing to securely store data from the central processing unit in the primary memory through the additional secured bus.

Preferentially, - the central processing unit (CPU) comprises means for triggering the secure loading of data in the central processing unit from the primary memory through the additional secured bus and means for triggering the secure storage of data in the primary memory from the central processing unit through the additional secured bus, and said triggering depends on a confidentiality nature of the data; - the means for triggering the secure loading or the secure storage of the data comprises a signal value that is encoded in the data; - the means for triggering the secure loading or the secure storage of the data comprises a signal value that depends of an address; - the device comprises an additional dedicated secured memory, the additional secured bus connects the central processing unit to the additional dedicated memory, and the data are securely loaded in the central processing unit through the additional secured bus upon use of the first operation allowing to securely load data in the central processing unit from the additional secured memory, and/or data are securely stored in the additional dedicated memory though the additional secured bus upon use of the second operation allowing to securely store data from the central processing unit; - the additional secured bus is a partial virtual additional secured bus, the partial virtual additional secured bus having a bus path that physically corresponds in part to the regular buses, but which has another part which bypasses some or all of the micro-architectural store buffer, the micro-architectural load port, the micro-architectural line fill buffer, and/or the cache memory; - the additional secured bus is a virtual additional secured bus, and wherein, when the first or second operations are encountered, the micro-architectural store buffer and/or a micro-architectural load port and/or a micro-architectural line fill buffer and/or cache memory are flushed and disabled; - the instruction set comprises an additional first opcode implementing the first operation and an additional second opcode implementing the second operation; - the first operation allowing to securely load data in the central processing unit from the additional secured memory is initiated when encountering the regular first instruction operation code fetched from a predefined specific memory location and/or having an address of an operand within a specific memory area, and/or the second operation allowing to securely store data in the primary memory is initiated when encountering the regular second instruction operation code fetched from a predefined specific memory location and/or having an address of an operand within a specific memory area; - the device implements a reduced instruction set computer architecture; - the reduced instruction set computer architecture is a reduced instruction set computer V architecture; and - the device implements a complex instruction set computer architecture.

According to a second aspect, the invention concerns a method for securing a semiconductor device comprising a central processing unit (CPU), a micro-architectural store buffer and/or a micro-architectural load port and/or a micro-architectural line fill buffer, and/or a cache memory, a primary memory, a cache bus allowing transfer of data at least from/to the central processing unit to/from the cache memory, a regular data bus allowing transfer of data at least from/to the central processing unit to/from the primary memory and a regular address bus allowing transfer of addresses from/to the central processing unit to/from the primary memory, wherein the central processing unit is provided with an instruction set, the instruction set comprising a regular first instruction operation code allowing to load data in the central processing unit from the primary memory through the system data bus, and a second instruction operation code allowing to store data from the central processing unit in the primary memory, characterized in that the method comprises - providing the device with an additional secured bus for transfer of data from/to the central processing unit to/from the primary memory or a dedicated additional memory, the additional secured bus bypassing the micro-architectural load port and/or the micro-architectural line fill buffer, and/or the cache memory, and - the instructions set of the central processing unit further implements two operations for a secured transfer, a first operation allowing to securely load data in the central processing unit from the primary memory through the additional secured bus, and a second operation allowing to securely store data from the central processing unit in the primary memory through the additional secured bus.

### BRIEF DESCRIPTION OF THE DRAWINGS

Other features and aspects of the present invention will be apparent from the following description and the accompanying drawings, in which:
Fig. 1 illustrates schematically a semiconductor device according to the state of the art;
Fig. 2 illustrates schematically a semiconductor device according to the state of the art, that depicts a regular store operation of data in the primary memory;
Fig. 3 illustrates schematically a semiconductor device according to the state of the art, in which dark dots have been added that identify possible locations of the leakages of data after a regular store information;
Fig. 4 illustrates schematically a semiconductor device according to the invention;
Fig. 5 illustrates schematically a semiconductor device that is secured according to the invention, that depicts a secured store operation;
Fig. 6 illustrates schematically, a device according to the invention, in which dark dots have been added that identify remaining possible locations for data leakages after a secured store information according to the invention; and
Fig. 7 illustrates schematically, a device according to particular embodiment of the invention, in which the device comprises an additional memory dedicated to the storage of data secured according to the invention.

### DETAILLED DESCRIPTION OF THE INVENTION

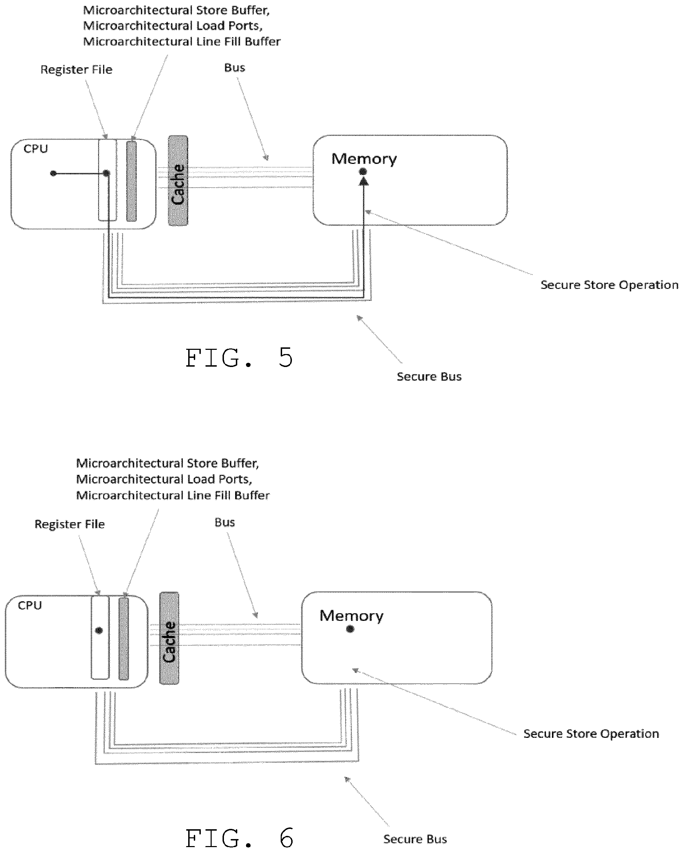

As shown in Figs. 4, 5 and 6, the invention concerns a secured semiconductor device comprising a CPU. The CPU is in particular a modern high-end CPU. For example, such a CPU is an Intel^{™} Core iXX, an ARM^{™} Axx or an AMD^{™} Ryzen CPU. The CPU may be homemade or open, as the RISC-V implementing CPUs.

Also, the secured semiconductor device according to the invention comprises a micro-architectural store buffer and/or at least one micro-architectural load port and/or a micro-architectural line fill buffer.

In addition, the secured semiconductor device according to the invention advantageously comprises a cache memory, that may be of various levels L1, L2 and/or L3, and a memory which is called primary memory in this invention. The primary memory is for example a random access memory (RAM), in particular a dynamic random access memory (DRAM). Nevertheless, according to the invention, the primary memory may be any memory whose leakage gives an edge to the attacker, even a non-volatile memory (NVM), or a read only memory (ROM).

A cache bus is allowing transfer of data at least from/to the central processing unit to/from the cache memory. A data system bus is allowing transfer of data at least from/to the central processing unit to/from the primary memory, in particular, the random access memory. A system address bus is allowing transfer of addresses at least from/to the central processing unit to/from the primary memory.

The central processing unit of the semiconductor device according to the invention is provided with an instruction set. The instructions of the instruction set are sets of operation codes or opcodes that the computer processor can understand. The opcodes are usually in 1s and 0s, or machine language. For example, the instruction set is a RISC (Reduced Instruction set Computer). RISCs use fewer instructions with simple constructs so that they can be executed much faster within the CPU without having to use memory as often. However, the invention may also concern semiconductor devices implementing complex instruction sets (CISC - Complex Instruction Set Computer). It contains instructions or tasks that control the movement of bits and bytes within the processor. The instruction set comprises a regular first instruction allowing to load data in the central processing unit from the primary memory through the system data bus (the LOAD instruction defined previously), and a regular second instruction allowing to store data from the central processing unit in the primary memory.

According to the invention, and as shown in Figs. 4, 5 and 6, the device further comprises an additional secured bus for transfer of data from/to the central processing unit to/from the primary memory, the additional secured bus bypassing the micro-architectural load port and/or the micro-architectural line fill buffer, and/or the cache memory. Bypassing the micro-architectural load port and/or the micro-architectural line fill buffer, and/or the cache memory prevents several classes of micro architectural attacks from recovering secret information.

In addition, according to the invention, the instruction set of the central processing unit further comprises two opcodes. A first opcode is an opcode allowing to load data in the central processing unit from the primary memory through the additional secured bus. A second opcode is allowing to store data from the central processing unit in the primary memory through the additional secured bus. In other words, the invention proposes the introduction of additional opcodes, that may be named LOAD_SEC and STORE_SEC to complement the regular LOAD and STORE, where load and store are respectively operations to read from a memory and write into a memory. Each time the opcode LOAD_SEC or STORE_SEC is encountered, the system is aware of the nature of the data (secure) and can then trigger an appropriate operation. Once decoded, the opcodes LOAD_SEC or STORE_SEC, the data will not go through the regular path. Neither the cache, nor any micro architectural buffer, will be involved in going from/to the regular memories.

Advantageously, the CPU comprises means for triggering the secure loading of data in the central processing unit from the primary memory through the additional secured bus and means for triggering the secure storage of data in the primary memory from the central processing unit through the additional secured bus, and according to which the triggering depends on a confidentiality nature of the data.

In Fig. 4 the additional bus is called "secure bus". This additional bus is used when LOAD_SEC or STORE_SEC are executed.

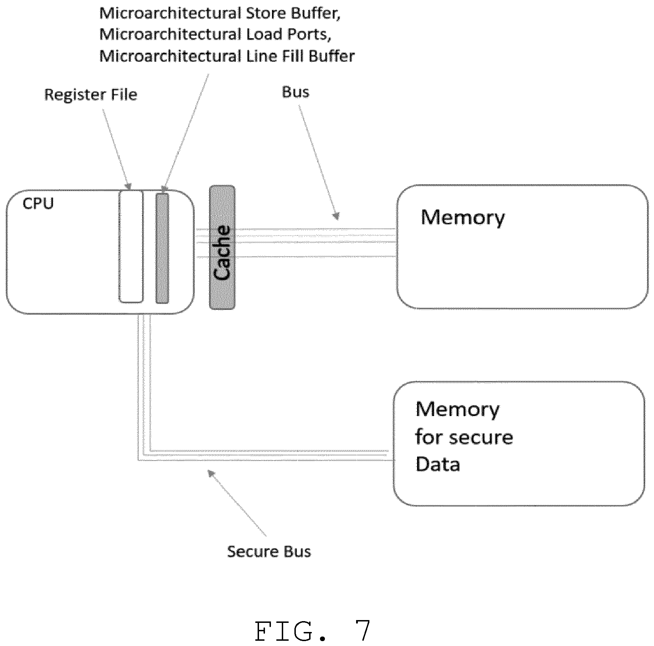

According to an alternative embodiment, an additional dedicated memory, that may be named "secured memory" or "memory for secure data" in Fig. 7, is implemented in the device in addition of the regular primary memory. This additional memory is for instance a random access memory, that may be a dynamic random access memory. Depending on the use of the opcodes LOAD_SEC or STORE_SEC, the loading or storage of data from or in the secured memory is actuated. According to such embodiment, the additional secured bus connects the CPU to the secured memory. The implementation of the additional secured memory does not involve extra complexity. It has no significant impact on the execution time on regular operations.

According to another alternative embodiment, the additional secured bus is a partial virtual additional secured bus. In such case, data are loaded in the CPU or stored in the regular memory using the partial virtual additional secured bus, which is a path that physically corresponds in part to the regular buses, but which has another part which bypasses some or advantageously all of the micro-architectural resources, i.e. a micro-architectural store buffer and/or a micro-architectural load port and/or a micro-architectural line fill buffer, and/or a cache memory. Alternatively, upon secure data processing some or, advantageously, all micro-architectural resources are flushed and then temporary disabled until the secure processing is done. Selection may be achieved via multiplexers driven by the decoding of the secure operation. This alternative embodiment does not present any important impact on the execution time on regular operation.

Another alternative embodiment implements virtual LOAD_SEC or STORE_SEC opcodes. Indeed, adding opcodes to an instruction set architecture may be cumbersome. It may impact the toolchain as well as all the ecosystem, even if it solves some of the security issues. According to this alternative embodiment, the LOAD_SEC and/or STORE_SEC operations, that avoid leakages in the micro architectural resources as described above, are generated when encountering a LOAD/STORE operation fetched from a predefined specific memory location, and/or the address of the operand is within a specific memory area. Hence, the developer would have to put his secure variables in this specified location and inform the system using, for instance, a shadow memory. Thus, each time a LOAD/STORE occurs, the system checks if the address belongs to the secure area and then acts as with the LOAD_SEC/STORE_SEC operation. This then only touches at the implementation but not at the ISA itself.

## Claims

1. A secured semiconductor device comprising a central processing unit (CPU), a micro-architectural store buffer and/or a micro-architectural load port and/or a micro-architectural line fill buffer, and/or a cache memory, a primary memory, a cache bus allowing transfer of data at least from/to the central processing unit to/from the cache memory, a regular data bus allowing transfer of data at least from/to the central processing unit to/from the primary memory and a regular address bus allowing transfer of addresses from/to the central processing unit to/from the primary memory, wherein the central processing unit is provided with an instruction set, the instruction set comprising a regular first instruction operation code allowing to load data in the central processing unit from the primary memory through the system data bus, and a regular second instruction operation code allowing to store data from the central processing unit in the primary memory, **characterized in that** the device further comprises an additional secured bus for transfer of data from/to the central processing unit to/from the primary memory or a dedicated additional memory, the additional secured bus bypassing the micro-architectural load port and/or the micro-architectural line fill buffer, and/or the cache memory, and the instructions set of the central processing unit further implements two operations for a secured transfer, a first operation allowing to securely load data in the central processing unit from the primary memory through the additional secured bus, and a second operation allowing to securely store data from the central processing unit in the primary memory through the additional secured bus.

2. The device according to claim 1, wherein the CPU comprises means for triggering the secure loading of data in the central processing unit from the primary memory through the additional secured bus and means for triggering the secure storage of data in the primary memory from the central processing unit through the additional secured bus, and in that said triggering depends on a confidentiality nature of the data.

3. The device according to claim 2, **characterized in that** the means for triggering the secure loading or the secure storage of the data comprises a signal value that is encoded in the data.

4. The device according to claim 2, **characterized in that** the means for triggering the secure loading or the secure storage of the data comprises a signal value that depends of an address.

5. The device according to one of the previous claims, **characterized in that** it comprises an additional dedicated secured memory, **in that** the additional secured bus connects the central processing unit to the additional dedicated memory, and **in that** data are securely loaded in the central processing unit through the additional secured bus upon use of the first operation allowing to securely load data in the central processing unit from the additional secured memory, and/or data are securely stored in the additional dedicated memory though the additional secured bus upon use of the second operation allowing to securely store data from the central processing unit.

6. The device according to one of the previous claims, wherein the additional secured bus is a partial virtual additional secured bus, the partial virtual additional secured bus having a bus path that physically correspond in part to the regular buses, but which has another part which bypasses some or all of the micro-architectural store buffer, the micro-architectural load port, the micro-architectural line fill buffer, and/or the cache memory.

7. The device according to one of the previous claims, wherein the additional secured bus is a virtual additional secured bus, and wherein, when the first or second operations are encountered, the micro-architectural store buffer and/or a micro-architectural load port and/or a micro-architectural line fill buffer and/or cache memory are flushed and disabled.

8. The device according to one of the previous claims, wherein the instruction set comprises an additional first opcode implementing the first operation and an additional second opcode implementing the second operation.

9. The device according to one of the previous claims, wherein the first operation allowing to securely load data in the central processing unit from the additional secured memory is initiated when encountering the regular first instruction operation code fetched from a predefined specific memory location and/or having an address of an operand within a specific memory area, and/or the second operation allowing to securely store data in the primary memory is initiated when encountering the regular second instruction operation code fetched from a predefined specific memory location and/or having an address of an operand within a specific memory area.

10. The device of one of the previous claims, wherein it implements a reduced instruction set computer architecture.

11. The device of claim 10, wherein the reduced instruction set computer architecture is a reduced instruction set computer V architecture.

12. The device of one of the claims 1 to 9, wherein it implements a complex instruction set computer architecture.

13. A method for securing a semiconductor device comprising a central processing unit (CPU), a micro-architectural store buffer and/or a micro-architectural load port and/or a micro-architectural line fill buffer, and/or a cache memory, a primary memory, a cache bus allowing transfer of data at least from/to the central processing unit to/from the cache memory, a regular data bus allowing transfer of data at least from/to the central processing unit to/from the primary memory and a regular address bus allowing transfer of addresses from/to the central processing unit to/from the primary memory, wherein the central processing unit is provided with an instruction set, the instruction set comprising a regular first instruction operation code allowing to load data in the central processing unit from the primary memory through the system data bus, and a second instruction operation code allowing to store data from the central processing unit in the primary memory, **characterized in that** the method comprises providing the device with an additional secured bus for transfer of data from/to the central processing unit to/from the primary memory or a dedicated additional memory, the additional secured bus bypassing the micro-architectural load port and/or the micro-architectural line fill buffer, and/or the cache memory, and
the instructions set of the central processing unit further implements two operations for a secured transfer, a first operation allowing to securely load data in the central processing unit from the primary memory through the additional secured bus, and a second operation allowing to securely store data from the central processing unit in the primary memory through the additional secured bus.
